(19) Europäisches Patentamt
European Patent Office
Office européen des brevets

(11) **EP 4 398 023 A1**

(12) **EUROPÄISCHE PATENTANMELDUNG**

(43) Veröffentlichungstag:
**10.07.2024  Patentblatt 2024/28**

(51) Internationale Patentklassifikation (IPC):
**G02F 1/03** (2006.01)     **G02F 1/35** (2006.01)

(21) Anmeldenummer: 23150519.9

(52) Gemeinsame Patentklassifikation (CPC):
**G02F 1/3525; G02F 1/0316**

(22) Anmeldetag: **05.01.2023**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder:
• **Fraunhofer-Gesellschaft zur Förderung der angewandten Forschung e.V.**
  **80686 München (DE)**
• **Albert-Ludwigs-Universität Freiburg**
  **79098 Freiburg (DE)**

(72) Erfinder:
• **Kühnemann, Frank, Dr.**
  **79110 Freiburg (DE)**
• **Herr, Simon J.**
  **79110 Freiburg (DE)**
• **Breunig, Ingo, Dr.**
  **79098 Freiburg (DE)**
• **Buse, Karsten, Prof. Dr.**
  **79110 Freiburg (DE)**

(74) Vertreter: **WSL Patentanwälte Partnerschaft mbB**
**Kaiser-Friedrich-Ring 98**
**65185 Wiesbaden (DE)**

(54) **NICHTLINEARES OPTISCHES BAUELEMENT UND VERFAHREN ZUM ERZEUGEN VON ELEKTROMAGNETISCHER STRAHLUNG**

(57)    Die vorliegende Erfindung betrifft ein nichtlineares optisches Bauelement mit einem optischen Wellenleiter, wobei der Wellenleiter einen stegförmigen Kern aus einem nichtlinear optischen Kristall umfasst, wobei der Kristall Photorefraktion zeigt, wobei der Kristall eine elektrische Dunkelleitfähigkeit aufweist, wobei der Kern eine Ausbreitungsrichtung für elektromagnetische Strahlung in dem Wellenleiter definiert, wobei der Kern eine polygonale Querschnittsfläche senkrecht zu der Ausbreitungsrichtung aufweist, und wobei der Wellenleiter an einer ersten Seitenfläche des Kerns eine elektrisch leitfähige erste Potentialausgleichsschicht und an einer der ersten Seitenfläche gegenüberliegenden zweiten Seitenfläche des Kerns eine elektrisch leitfähige zweite Potentialausgleichsschicht aufweist.

Fig. 1

EP 4 398 023 A1

**Beschreibung**

Die vorliegende Erfindung betrifft ein nichtlinear optisches Bauelement mit einem optischen Wellenleiter, wobei der Wellenleiter einen stegförmigen Kern aus einem nichtlinear optischen Kristall umfasst, wobei der Kristall Photorefraktion zeigt, wobei der Kristall eine elektrische Dunkelleitfähigkeit aufweist, wobei der Kern eine Ausbreitungsrichtung für elektromagnetische Strahlung in dem Wellenleiter definiert und wobei der Kern eine polygonale Querschnittsfläche senkrecht zu der Ausbreitungsrichtung aufweist.

Die vorliegende Erfindung betrifft darüber hinaus ein Verfahren zum Erzeugen von elektromagnetischer Strahlung mit den Schritten: Erzeugen und Abstrahlen einer elektromagnetischen Ausgangsstrahlung mit einer ersten Wellenlänge, Einkoppeln der elektromagnetischen Ausgangsstrahlung in einer Ausbreitungsrichtung in einen Wellenleiter mit einem stegförmigen Kern aus einem nichtlinear optischen Kristall, wobei der Kristall Photorefraktion zeigt, wobei der Kristall eine elektrische Dunkelleitfähigkeit aufweist, wobei der Kern eine polygonale Querschnittsfläche senkrecht zu der Ausbreitungsrichtung aufweist und Wandeln der Ausgangsstrahlung in eine Nutzstrahlung mit einer von der ersten Wellenlänge verschiedenen zweiten Wellenlänge oder Modulieren der Ausgangsstrahlung oder Schalten der Ausgangsstrahlung mittels eines nichtlinear optischen Prozesses in dem Kristall.

Aus der integrierten Optik sind nichtlinear optische Bauelemente mit einem optischen Wellenleiter nicht mehr wegzudenken. Nichtlineare optische Bauelemente dienen der Frequenzwandlung, der Modulation und dem Schalten von elektromagnetischer Strahlung und finden Anwendung beim Bau von optischen Frequenzkonvertern, Modulatoren und Schaltern und anderen optischen Bauelementen.

Ist ein nichtlinear optischer Kristall, der den stegförmigen Kern eines solchen Wellenleiters bildet, photorefraktiv, so wird der lichtführende Bereich des nichtlinear optischen Kristalls bei der Lichtleitung aufgrund lichtinduzierter freier Ladungsträger geringfügig elektrisch leitend. Es kommt zu einer lichtinduzierten Ladungstrennung. Diese getrennten Ladungen wiederum bauen elektrische Raumladungsfelder auf, die durch den elektrooptischen Effekt zu einer Änderung des Brechungsindex innerhalb des lichtführenden Bereichs führen können. Voraussetzung dafür, dass ein nichtlinear optischer Kristall Photorefraktion zeigt, ist, dass der Kristall ein elektrooptischer Kristall ist, d.h. der Brechungsindex des Kristalls hängt von einem angelegten elektrischen Feld ab.

Stellt man ein nichtlineares optisches Bauelement bereit, bei dem ein optischer Wellenleiter einen stegförmigen Kern aus einem nichtlinear optischen Kristall umfasst, so führt die Photorefraktion des Kristalls zu einer Änderung des Brechungsindex bzw. der Dispersionseigenschaften des Kristalls. Photorefraktion wird daher häufig auch als optischer Schaden bezeichnet. Die zeitliche Änderung der Dispersionseigenschaften des nichtlinear optischen Kristalls kann zu einer zeitlichen Drift bzw. Instabilität bei der nichtlinear-optischen Frequenzkonversion durch eine Phasenfehlanpassung oder eine Phasendrift führen. Je höher die geführte Lichtleistung ist und je stärker der Wellenleiter das elektromagnetische Feld der Strahlung eingeengt ("confinement"), desto stärker ist der Einfluss der Photorefraktion auf den nichtlinear optischen Prozess.

Demgegenüber ist es Aufgabe der vorliegenden Erfindung, ein nichtlineares optisches Bauelement mit einem Wellenleiter, der einen stegförmigen Kern aus einem nichtlinear optischen Kristall umfasst, bereitzustellen, bei dem der negative Einfluss der Photorefraktion auf den nichtlinear optischen Prozess reduziert ist, obwohl der nichtlinear optische Kristall grundsätzlich Photorefraktion zeigt.

Die vorliegende Aufgabe wird durch ein nichtlinear optisches Bauelement gemäß dem beigefügten unabhängigen Anspruch 1 gelöst. Dazu weist der Wellenleiter des nichtlinear optischen Bauelements der eingangs genannten Art an einer ersten Seitenfläche des Kerns eine elektrisch leitfähige erste Potentialausgleichsschicht und an einer der ersten Seitenfläche gegenüberliegenden zweiten Seitenfläche des Kerns eine elektrisch leitfähige zweite Potentialausgleichsschicht auf.

Die der vorliegenden Erfindung zugrunde liegende Idee ist es, die Ausbildung von elektrischen Raumladungsfeldern, welche über den elektrooptischen Effekt zu Änderungen der Dispersionseigenschaften des lichtführenden nichtlinear optischen Kerns des Wellenleiters führen, zu verhindern. Dazu werden die lichtinduzierten freien Ladungsträger abgeleitet und so wirksam das Entstehen elektrischer Felder, die den Kern durchsetzen verhindert.

Zu diesem Zweck weist der Kern des Wellenleiters erfindungsgemäß an zwei gegenüberliegenden Seitenflächen leitfähige Potentialausgleichsschichten auf, die dem Ladungsträgerabfluss und damit dem Potentialausgleich dienen.

Da sich zudem die erste und die zweite Potentialausgleichsschicht bei einem Wellenleiter noch innerhalb des Bereichs des Wellenleiters befinden, welcher beleuchtet ist, d.h. vom elektromagnetischen Feld der elektromagnetischen Strahlung durchdrungen ist, ist gleichzeitig sichergestellt, dass keine Fotoladungen in unbeleuchteten Bereichen isoliert und dort nicht abgeleitet werden können.

In einer Ausführungsform der Erfindung ist die im Wesentlichen polygonale Querschnittsfläche des Kerns des Wellenleiters trapezförmig, rechteckig oder quadratisch. Von einer solchen im Wesentlichen polygonalen Grundform der Querschnittsfläche des Kerns senkrecht zu der Ausbreitungsrichtung sind auch Abweichungen umfasst, bei denen die jeweilige Seitenfläche bei einer Betrachtung in der Querschnittsebene senkrecht zur Ausbreitungsrichtung nicht vollständig gerade ist, sondern einen leicht konkaven oder konvexen Verlauf aufweist.

Die vorliegende Erfindung bezieht sich explizit nur auf Wellenleiter mit einem stegförmigen Kern. Dabei ist eine maximale Kantenlänge des Kerns maximal etwa 20-mal größer als die Wellenlänge, für die das nichtlinear optische Bauelement bzw. ihr Wellenleiter designt ist. In einer Ausführungsform der Erfindung beträgt die Wellenlänge 5 μm oder weniger, vorzugsweise 3 μm oder weniger. Die größte Kantenlänge der Querschnittsfläche ist in einer Ausführungsform höchstens 25-mal größer, vorzugsweise höchstens 20-mal größer als die Wellenlänge.

In einer Ausführungsform der Erfindung beträgt die größte Kantenlänge der Querschnittsfläche des Kerns 100 μm oder weniger, vorzugsweise 60 μm oder weniger und besonders bevorzugt 10 μm oder weniger.

Es versteht sich, dass ein solcher Wellenleiter mit einem stegförmigen Kern in einer Ausführungsform unterschiedliche Erstreckungen in unterschiedlichen Raumrichtungen aufweisen kann. In einer Ausführungsform der Erfindung hat der stegförmige Kern eine im Wesentlichen rechteckige Querschnittsfläche. In einer Ausführungsform der Erfindung beträgt eine Kantenlänge der Querschnittsfläche des stegförmigen Kerns weniger als 1 μm und eine Kantenlänge einer zweiten Kante des stegförmigen Kerns 10 μm oder weniger. In einer Ausführungsform der Erfindung ist die kürzere Kantenlänge im Wesentlichen senkrecht zu einer Substratoberfläche eines Trägers, auf dem der stegförmige Kern montiert ist, orientiert.

Eine solche asymmetrische Ausgestaltung der Querschnittsfläche des Kerns ist typisch für einen planaren optischen Wellenleiter, so wie er in der integrierten Optik auf einem Träger bereitgestellt wird.

Es hat sich herausgestellt, dass eine elektrisch leitfähige Potentialausgleichsschicht, so wie sie erfindungsgemäß der Wellenleiter aufweist, zu einer extremen Dämpfung des geführten Lichts bewirken kann.

Aufgrund der kleinen Abmessungen eines Wellenleiters für elektromagnetische Strahlung reicht gemäß einer Ausführungsform schon eine geringfügige elektrische Leitfähigkeit aus, um die durch Lichteinwirkung entstandenen Ladungsträger abzuführen. Daher sind die erste und die zweite Potentialausgleichsschicht in einer Ausführungsform elektrisch nur schwach leitende Schichten. Diese verhindern den Aufbau von elektrischen Feldern, führen aber gleichzeitig auch nur zu einem moderaten Anstieg der Dämpfung der geführten elektromagnetischen Strahlung.

In einer Ausführungsform der vorliegenden Erfindung weisen die erste und die zweite Potentialausgleichsschicht jeweils eine elektrische Filmleitfähigkeit und eine Filmdicke auf. Die elektrische Filmleitfähigkeit eines dünnen elektrisch leitenden Films wird in Siemens pro Meter angegeben. Die Filmdecke ist gemessen in einer Richtung senkrecht zur jeweiligen Kante des polygonalen Querschnitts des Kerns und ist in Metern angegeben. Um gleichzeitig die erforderliche elektrische Leitfähigkeit der jeweiligen Potentialausgleichsschicht und die geringe Dämpfung der geführten elektromagnetischen Strahlung bereitzustellen, ist nicht nur die Leitfähigkeit der Schicht, sondern auch deren Dicke relevant. Daher beträgt in einer Ausführungsform für die erste und die zweite Potentialausgleichsschicht jeweils das Produkt aus der elektrischen Filmleitfähigkeit und der Filmdicke 1 Siemens oder weniger, vorzugsweise 0,1 Siemens oder weniger und besonders bevorzugt 0,01 Siemens oder weniger.

Gemäß einer Ausführungsform der vorliegenden Erfindung weisen die erste und die zweite Potentialausgleichsschicht jeweils eine elektrische Filmleitfähigkeit auf, wobei die elektrische Filmleitfähigkeit der ersten und der zweiten Potentialausgleichschicht um einen Faktor 10 oder mehr, vorzugsweise um einen Faktor 100 oder mehr, größer ist als die Dunkelleitfähigkeit des Kristalls. Auf diese Weise lässt sich eine effektive Ladungsträgerabführung bewirken.

Aufgrund der Symmetrieeigenschaften von nichtlinear optischen Kristallen, welche Photorefraktion zeigen, und des Schnitts dieser Kristalle, um sie für effektive nichtlinear optische Prozesse einsetzen zu können, ist es zweckmäßig, wenn in einer Ausführungsform der Erfindung die erste und die zweite Potentialausgleichsschicht auf denjenigen Flächen des stegförmigen Kerns vorgesehen sind, welche senkrecht zu einer optischen Kristallachse des Kristalls orientiert sind. Diese Flächen senkrecht zu einer optischen Kristallachse werden auch als die +z-Flächen und die -z-Fläche des Kristalls bezeichnet.

Die erste und die zweite Potentialausgleichsschicht weisen jeweils eine elektrische Filmleitfähigkeit und eine Filmdicke auf. Dabei ist in einer Ausführungsform für die erste und die zweite Potentialausgleichsschicht jeweils das Produkt aus der elektrischen Filmleitfähigkeit $\sigma_{Film}$ und der Filmdicke $d_{Film}$ der Potentialausgleichsschicht größer als das Produkt aus einer kristallinen Photoleitfähigkeit des Kristalls $\sigma_{Photo}$ (ohne die jeweilige Potentialausgleichsschicht) und einer Größe V, d.h.

$$\sigma_{Film} \cdot d_{Film} > \sigma_{Photo} \cdot V$$

Dabei gilt

$$V = \frac{l\, b\, a}{d_{Kristall}\, w}.$$

$d_{Kristall}$ ist eine Dicke des Kristalls ohne die Potentialausgleichsschichten in einer Richtung senkrecht zu der ersten und der zweiten Seitenfläche. b ist eine Breite des Wellenleiters senkrecht zur Dicke $d_{Kristall}$ des Kristalls und l ist die Länge einer Domäne des Kristalls in der Ausbreitungsrichtung. Dabei bezeichnet eine Domäne des Kristalls einen zusammenhängenden Bereich des Kristalls, in dem die spontane Polarisierung des Kristalls die gleiche Orientierung aufweist.

*a* bezeichnet eine Pfadlänge eines Pfads mit minimaler Länge zwischen den geometrischen Schwerpunkten zweier Flächenabschnitte mit entgegengesetzt orientierter spontaner Polarisierung des Kristalls (d.h. +z-Fläche und -z-Flächen) auf den ersten und zweiten Seitenflächen, wobei der Pfad auf der Oberfläche des Wellenleiters verläuft, w ist eine Domänenbreite senkrecht zu dem Pfad mit der Pfadlänge *a*.

Ein periodisch oder aperiodisch gepolter Kristall ist ein Kristall mit mindestens zwei Domänen mit alternierend entgegengesetzt orientierter spontaner Polarisierung. Ist der Kristall nicht periodisch oder aperiodisch gepolt und weist daher nur eine einzige Domäne auf, so sind die Schwerpunkte der zu betrachtenden Flächenabschnitte mit entgegengesetzten +z und -z Kristallorientierungen die Schwerpunkte der ersten Seitenfläche und der zweiten Seitenfläche. In diesem Fall gilt für die Größe V

$$V = \frac{b(b + d_{Kristall} + 2d_{Film})}{d_{Kristall}}.$$

Ist der Kristall hingegen periodisch oder aperiodisch gepolt mit einer Mehrzahl von entgegengesetzt orientierten Domänen, so verbindet der Pfad mit minimaler Pfadlänge die Schwerpunkte der Flächenabschnitte auf der ersten Seitenfläche oder auf der zweiten Seitenfläche zweier benachbarter Domänen.

Während es aus herstellungstechnischen Gründen bevorzugt ist, beide Potentialausgleichsschichten identisch auszubilden, können die Potentialausgleichsschichten in einer Ausführungsform jedoch voneinander verschieden ausgebildet sein.

Gemäß einer Ausführungsform der vorliegenden Erfindung ist zumindest die erste oder die zweite Potentialausgleichsschicht eine auf die Seitenfläche des Kerns aufgebrachte Schicht aus Indiumzinnoxid oder dotiertem Siliziumdioxid.

In einer Ausführungsform der vorliegenden Erfindung ist zumindest die erste oder die zweite Potentialausgleichsschicht eine in dem Kristall durch Eindiffusion von Metallionen, insbesondere von Eisenionen oder Kupferionen, ausgebildete Schicht. In einer solchen Ausführungsform sind sowohl der Kern als auch die Potentialausgleichsschichten im Material des Kristalls ausgebildet.

In einer Ausführungsform der vorliegenden Erfindung sind die erste und die zweite Potentialausgleichsschicht elektrisch leitend miteinander verbunden. Eine derartige elektrisch leitend Verbindung sorgt für den erforderlichen Potentialausgleich zwischen den gegenüberliegenden, das nachteilige elektrische Feld ausbildenden Raumladungszonen.

In einer Ausführungsform der Erfindung wird die elektrische Leitung zwischen der ersten und der zweiten Potentialausgleichsschicht durch einen aufgebondeten Draht bereitgestellt.

In einer alternativen Ausführungsform sind die erste und die zweite Potentialausgleichsschicht durch eine elektrisch leitende Verbindungsschicht an einer dritten Seitenfläche des Kerns elektrisch leitend miteinander verbunden.

In einer Ausführungsform der Erfindung ist die elektrisch leitende Verbindungsschicht so ausgebildet, wie es zuvor in Ausführungsformen für die erste und/oder die zweite Potentialausgleichsschicht beschrieben wurde. Auch die Verbindungsschicht kann beispielsweise durch Aufbringen einer Beschichtung auf den Kern oder durch Eindiffusion von Metallionen in den Kristall ausgebildet sein.

In einer Ausführungsform der vorliegenden Erfindung ist der Kristall des stegförmigen Kerns periodisch oder aperiodisch gepolt. Derartig gepolte Kristalle sind aus der nichtlinearen Optik in mannigfaltigen Ausführungsformen bekannt und dienen der Quasi-Phasenanpassung und damit der Steigerung der Effizienz der nichtlinearen Konversion der in den nichtlinear optischen Kristall eingestrahlten elektromagnetischen Ausgangsstrahlung.

Aufgrund der Polung des Kristalls haben aneinander angrenzenden Domänen des Kristalls eine um 180° gedrehte Kristallorientierung. Daher sind auch die Vorzeichen der von den photoinduzierten Ladungsträgern in benachbarten Domänen generierten Raumladungsbereiche umgedreht. Damit zeigen die elektrischen Felder, welche den photorefraktiven Effekt bewirken könnten, in den aneinander angrenzenden Domänen mit entgegengesetzter Polung in entgegengesetzte Richtung. Sind die Flächenabschnitte aller Domänen mit der ersten Polung auf einer Seitenfläche des Kristalls zusammen in etwa, vorzugsweise genau gleich groß wie die Flächenabschnitte aller Domänen mit der zweiten, entgegengesetzten Polung auf der gleichen Seitenfläche des Kristalls, so erübrigt sich in einer Ausführungsform eine elektrische leitende Verbindung zwischen der ersten und der zweiten Potentialausgleichsschicht, da der Potentialausgleich bereits zwischen Flächenabschnitten mit entgegengesetzter Polung auf der gleichen Seitenfläche des Kristalls erfolgen kann.

In einer Ausführungsform der Erfindung besteht der Kristall aus Lithiumniobat, vorzugsweise aus MgO-dotiertem Lithiumniobat, oder Lithiumtantalat.

Es hat sich herausgestellt, dass Lithiumniobat und Lithiumtantalat für Bauelemente der integrierten Optik von herausragender Bedeutung sind. Sie lassen sich auf einem Isolator als Träger der integrierten Struktur montieren. Man spricht auch von Lithiumniobat oder Lithiumtantalat auf Isolator (Englisch: lithium niobate-on-insulator, kurz LNOI).

In einer Ausführungsform der vorliegenden Erfindung sind die Seitenflächen des Wellenleiters, vorzugsweise eine erste, eine zweite und eine dritte Seitenfläche des Wellenleiters, von Luft umgeben.

Jedoch sind Ausführungsformen denkbar, in denen der Wellenleiter mit einer Schutzschicht, beispielsweise einer Schutzschicht aus $SiO_2$, überzogen ist. In einer Ausführungsform der Erfindung ist das SiOz auf den Wellenleiter aufgedampft oder durch Sputtern aufgebracht.

In einer Ausführungsform der vorliegenden Erfindung ist der Wellenleiter mit einer vierten Seitenfläche auf einem Träger, vorzugsweise einem elektrisch isolierenden Träger (Isolator), montiert.

Die oben bezeichnete Aufgabe wird zudem auch durch eine optische Baugruppe mit einer Strahlungsquelle für elektromagnetische Strahlung und einem nichtlinear optischen Bauelement, so wie es in Ausführungsformen davon zuvor beschrieben wurde, gelöst, wobei die Strahlungsquelle derart eingerichtet ist, dass sie in einem Betrieb der optischen Baugruppe elektromagnetische Ausgangsstrahlung generiert, wobei die Strahlungsquelle und das nichtlinear optische Bauelement derart angeordnet sind, dass die elektromagnetische Ausgangsstrahlung in dem Betrieb der optischen Baugruppe in den Wellenleiter eingekoppelt wird und wobei die Ausgangsstrahlung in dem Betrieb der Baugruppe in Nutzstrahlung gewandelt wird.

Zumindest eine der zuvor genannten Aufgaben wird auch durch ein Verfahren zum Erzeugen von elektromagnetischer Strahlung gemäß dem darauf gerichteten unabhängigen Anspruch der vorliegenden Anmeldung gelöst. Dazu weist das Verfahren der eingangs genannten Art weiterhin den Schritt auf: Bereitstellen eines Potentialausgleichs zwischen an einer ersten Seitenfläche des Kerns akkumulierten Ladungsträgern und an einer der ersten Seitenfläche des Kerns gegenüberliegenden zweiten Seitenfläche des Kerns akkumulierten Ladungsträgern.

Soweit Aspekte der Erfindung im Hinblick auf das Verfahren beschrieben werden, so gelten diese auch für die zuvor beschriebenen Ausführungsformen des nichtlinear optischen Bauelements und umgekehrt. Soweit das Verfahren mit einem nichtlinear optischen Bauelement gemäß dieser Erfindung ausgeführt wird, so weist dieses Bauelement die entsprechenden Einrichtungen hierfür auf. Insbesondere sind Ausführungsformen des nichtlinear optischen Bauelements zum Ausführen der hierin beschriebenen Ausführungsformen des Verfahrens geeignet.

Zusammenfassend können das Wandeln der Ausgangsstrahlung in eine Nutzstrahlung, das Modulieren der Ausgangsstrahlung und das Schalten der Ausgangsstrahlung auch als Aufprägen eines nichtlinearen Effekts auf die Ausgangsstrahlung bezeichnet werden.

In einer Ausführungsform der Erfindung weist die Querschnittsfläche des Kerns eine maximale Kantenlänge auf, die höchstens das Zwanzigfache der ersten Wellenlänge beträgt.

In einer Ausführungsform der Erfindung umfasst das Bereitstellen des Potentialausgleichs ein Anordnen einer ersten elektrisch leitfähigen Potentialausgleichsschicht an einer ersten Seitenfläche des Wellenleiters und einer zweiten elektrisch leitfähigen Potentialausgleichsschicht an einer der ersten Seitenfläche gegenüberliegenden zweiten Seitenfläche, wobei die erste und die zweite Potentialausgleichsschicht jeweils eine elektrische Filmleitfähigkeit und eine Filmdicke aufweisen, wobei für die erste und die zweite Potentialausgleichsschicht jeweils das Produkt aus der elektrischen Filmleitfähigkeit und der Filmdicke so gewählt ist, dass ein Dämpfungsfaktor des Wellenleiters für die elektromagnetische Ausgangsstrahlung 3 dB/cm oder weniger beträgt.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.

Figur 1      ist eine schematische Querschnittsansicht einer ersten Ausführungsform eines nichtlinearen optischen Bauelements in einer Querschnittsebene senkrecht zur Ausbreitungsrichtung, wobei eine optische Kristallachse horizontal orientiert ist.

Figur 2      ist eine schematische Querschnittsansicht einer zweiten Ausführungsform eines nichtlinearen optischen Bauelements in einer Querschnittsebene senkrecht zur Ausbreitungsrichtung, wobei die optische Kristallachse vertikal orientiert ist.

Figur 3      ist eine schematische isometrische Darstellung der relevanten Dimensionen der Ausführungsform des nichtlinearen optischen Bauelements aus Figur 2.

Figur 4      ist eine schematische isometrische Darstellung der relevanten Dimensionen einer dritten Ausführungsform des nichtlinearen optischen Bauelements mit einem periodisch oder aperiodisch gepolten Kristall.

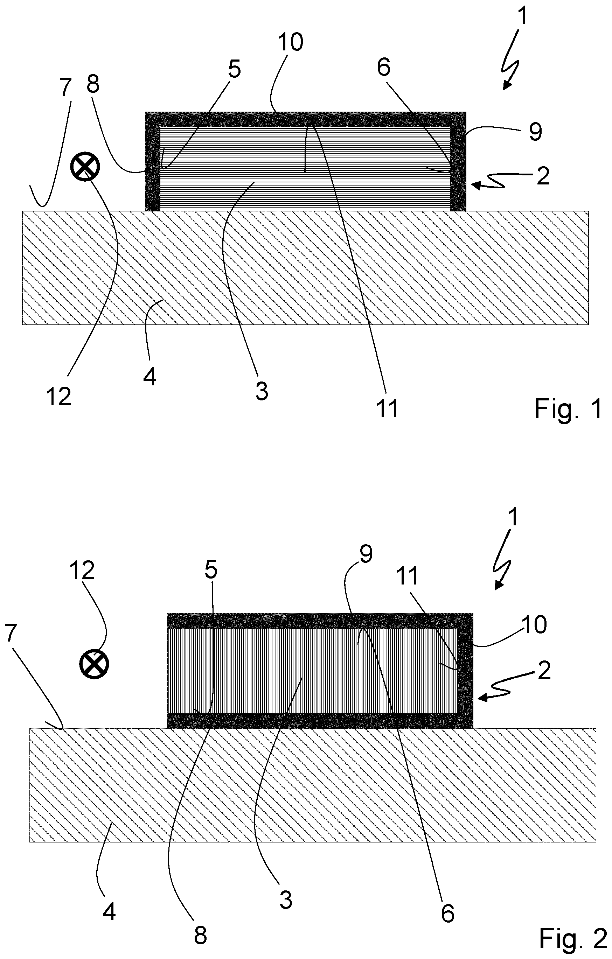

Die Figuren 1 und 2 zeigen zwei alternative Ausführungsformen eines nichtlinearen optischen Bauelements 1. Die beiden Varianten unterscheiden sich durch die kristallographische Orientierung des stegförmigen Kerns 3 des Wellenleiters 2. In beiden Varianten ist der Stegwellenleiter 2 auf einem isolierenden Träger 4 montiert. Der Kern 3 des Wellenleiters 2 wird von einem MgO-dotierten Lithiumniobat-Kristall gebildet.

In der Ausführungsform aus Figur 1 ist der Kristall des Kerns 3 so orientiert, dass die +z- und -z-Flächen des Kristalls, welche die erste Seitenfläche 5 und die zweite Seitenfläche 6 des Kerns 3 bilden, senkrecht zu einer Oberfläche 7 des Trägers 4 stehen. Eine Kristallachse verläuft horizontal und parallel zu der Oberfläche 7.

Demgegenüber liegen die erste Seitenfläche 5 und die zweite Seitenfläche 6 des Kerns 3 bei der Ausführungsform aus Figur 2 im Wesentlichen parallel zu der Oberfläche 7 des Trägers 4. In beiden Ausführungsformen der Figuren 1 und 2 sind auf den ersten und zweiten Seitenflächen 5, 6 des Kerns 3 jeweils eine leitfähige Potentialausgleichsschicht vorgesehen. Dabei wird die Potentialausgleichsschicht auf der ersten Seitenfläche 5 als erste Potentialausgleichsschicht 8 bezeichnet und die Potentialausgleichsschicht an der zweiten Seitenfläche 6 des Kerns 3 als zweite Potentialausgleichsschicht 9.

In der Ausführungsform aus Figur 1 sind die erste und die zweite Potentialausgleichsschicht 8, 9 von einer Beschichtung aus Indiumzinnoxid auf der Seitenfläche 5, 6 des Kerns 3 ausgebildet. Demgegenüber sind die ersten und zweiten Potentialausgleichsschichten 8, 9 der Ausführungsform aus Figur 2 durch Eindiffundieren von Kupferionen in das Material des Kristalls eingebracht. Der Kern 3 sowie die erste und die zweite Potentialausgleichsschicht 8, 9 des Wellenleiters umfassen somit das Material des Kristalls.

Ohne die Potentialausgleichsschichten 8, 9 würden sich bei einer Führung einer elektromagnetischen Welle in dem Kern 3 photoinduzierte Ladungsträger in Raumladungszonen an den ersten und zweiten Seitenflächen 5, 6 akkumulieren, sodass diese ein elektrisches Feld ausbilden und den Brechungsindex des Kristalls zeitabhängig ändern. In der Ausführungsform aus Figur 1 würde sich das elektrische Feld im Wesentlichen parallel zur Oberfläche 7 des Trägers 4 erstrecken. In der Ausführungsform aus Figur 2 würde sich das elektrische Feld im Wesentlichen senkrecht zur Oberfläche 7 des Trägers 4 erstrecken.

Die Potentialausgleichsschichten 8, 9 an den ersten und zweiten Seitenflächen 5, 6 des Kerns 3 ermöglichen nun einen Abfluss der photoinduzierten Ladungsträger aus den Raumladungszonen, wobei ein Potentialausgleich zwischen den auf die Potentialausgleichschichten 8, 9 abgeflossenen Ladungsträgern durch eine Verbindungschicht 10 auf einer dritten Seitenfläche 11 des Kerns 3 ermöglicht wird. Die Verbindungsschicht ist in der Ausführungsform aus Figur 1 wie die Potentialausgleichspflichten 8, 9 aus aufgedampften Indiumzinnoxid hergestellt. In der Ausführungsform aus Figur 2 ist die Verbindungsschicht 10 wie auch die ersten und zweiten Potentialausgleichsschichten 8, 9 durch Eindiffundieren von Eisenionen in den Kristall ausgebildet.

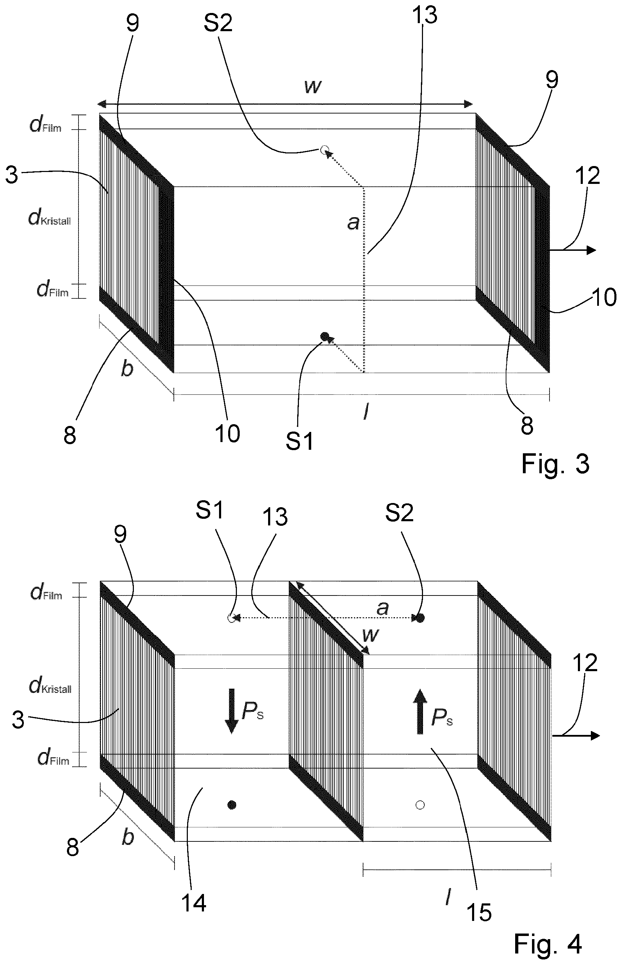

Figur 3 zeigt eine schematische Darstellung des Wellenleiters 2 aus Figur 2 zur Erläuterung der Dimensionierung des Kristalls und der Potentialausgleichschichten 8, 9. Der Kristall des Kerns 3 hat nur eine einzige Domäne, ist also nicht periodisch oder aperiodisch gepolt. Um einen hinreichenden Potentialausgleich zur Vermeidung einer Änderung der Dispersionseigenschaften des Kristalls während der Beleuchtung mit elektromagnetischer Strahlung zu erreichen, ist für die erste und die zweite Potentialausgleichsschicht 8, 9 jeweils das Produkt aus der elektrischen Filmleitfähigkeit $\sigma_{Film}$ und der Filmdicke $d_{Film}$ der jeweiligen Potentialausgleichsschicht 8, 9 größer als das Produkt aus einer kristallinen Photoleitfähigkeit des Kristalls $\sigma_{Photo}$ (ohne die jeweilige Potentialausgleichsschicht 8, 9) und einer Größe V. Dabei gilt

$$V = \frac{l\,b\,a}{d_{Kristall}\,w}.$$

$d_{Kristall}$ ist die Dicke des Kristalls ohne die Potentialausgleichsschichten 8, 9 in einer Richtung senkrecht zu der ersten und der zweiten Seitenfläche 5, 6. b ist die Breite des Wellenleiters 2 senkrecht zu der Dicke $d_{Kristall}$ des Kristalls und *l* ist die Länge der einzigen Domäne des Kristalls in der Ausbreitungsrichtung . a bezeichnet eine Pfadlänge eines Pfads 13 minimaler Länge zwischen den geometrischen Schwerpunkten zweier Flächenabschnitte mit entgegengesetzter spontaner Polarisierung des Kristalls auf den ersten und zweiten Seitenflächen 5, 6, wobei der Pfad auf der Oberfläche des Wellenleiters verläuft, w ist eine Domänenbreite senkrecht zu dem Pfad 13 mit der Pfadlänge a.

Im Gegensatz zu dem Kristall des Kerns 3 aus Figur 3 weist der Kristall des Kerns 3 in der Ausführungsform aus Figur 4 eine periodische Polung mit zwei Domänen 14, 15 auf. In diesem Fall verbindet der Pfad 13 mit minimaler Pfadlänge die Flächenschwerpunkte S1, S2 der benachbarten Domänen 14, 15 auf einer der ersten oder zweiten Seitenflächen 5, 6.

In beiden Ausführungsformen der Figuren 2 und 3 einerseits und der Figur 4 andererseits beträgt das Produkt aus der Filmleitfähigkeit $\sigma_{Film}$ und der Filmdicke $d_{Film}$ der jeweiligen Potentialausgleichsschicht 8, 9 0,1 Siemens pro Meter und ist damit deutlich größer als das Produkt aus der kristallinen Photoleitfähigkeit des Kristalls $\sigma_{Photo}$ (ohne die jeweilige Potentialausgleichsschicht 8, 9) und *V*. V liegt für typische Kristallabmessungen in einem Bereich von $10^{-6}$ m bis $10^{-5}$ m. In der gezeigten Ausführungsform ist $b = 2 \cdot 10^{-6}$ m, $a = 1 \cdot 10^{-6}$ m, $d_{Kristall} = 1 \cdot 10^{-6}$ m und $d_{Film} = 25 \cdot 10^{-9}$ m.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbaren Ausführungsformen beschränkt.

Abwandlungen der offenbaren Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

Bezugszeichenliste

| | |
|---|---|
| 1 | Bauelement |
| 2 | Wellenleiter |
| 3 | Kern |
| 4 | Träger |
| 5 | erste Seitenfläche |
| 6 | zweite Seitenfläche |
| 7 | Oberfläche des Trägers 4 |
| 8 | erste Potentialausgleichschicht |
| 9 | zweite Potentialausgleichschicht |
| 10 | Verbindungsschicht |
| 11 | dritte Seitenfläche |
| 12 | Ausbreitungsrichtung |
| 13 | Pfad |
| 14 | Domäne |
| 15 | Domäne |

| | |
|---|---|
| $\sigma_{Film}$ | elektrische Filmleitfähigkeit |
| $d_{Film}$ | Filmdicke |
| $\sigma_{Photo}$ | kristalline Photoleitfähigkeit des Kristalls |
| $d_{Kristall}$ | Dicke des Kristalls |
| $b$ | Breite des Wellenleiters |
| $l$ | Länge der jeweiligen Domäne des Kristalls in der Ausbreitungsrichtung |
| $a$ | Pfadlänge |
| S1, S2 | Flächenschwerpunkte |

**Patentansprüche**

1. Nichtlineares optisches Bauelement (1) mit einem optischen Wellenleiter (2),

   wobei der Wellenleiter (2) einen stegförmigen Kern (3) aus einem nichtlinear optischen Kristall umfasst,

   wobei der Kristall Photorefraktion zeigt,
   wobei der Kristall eine elektrische Dunkelleitfähigkeit aufweist,
   wobei der Kern (3) eine Ausbreitungsrichtung (12) für elektromagnetische Strahlung in dem Wellenleiter (2) definiert und
   wobei der Kern (3) eine polygonale Querschnittsfläche senkrecht zu der Ausbreitungsrichtung (12) aufweist,

   **dadurch gekennzeichnet, dass**

   der Wellenleiter (2) an einer ersten Seitenfläche (5) des Kerns (3) eine elektrisch leitfähige erste Potentialausgleichsschicht (8, 9) und an einer der ersten Seitenfläche (5) gegenüberliegenden zweiten Seitenfläche (6) des Kerns (3) eine elektrisch leitfähige zweite Potentialausgleichsschicht (8, 9) aufweist.

2. Nichtlinear optisches Bauelement (1) nach dem vorhergehenden Anspruch, wobei die erste und die zweite Potentialausgleichsschicht (8, 9) jeweils eine elektrische Filmleitfähigkeit und eine Filmdicke aufweisen, wobei für die erste und die zweite Potentialausgleichsschicht (8, 9) jeweils das Produkt aus der elektrischen Filmleitfähigkeit und der Filmdicke 1 Siemens oder weniger, vorzugsweise 0,1 Siemens oder weniger und besonders bevorzug 0,01 Siemens oder weniger beträgt.

3. Nichtlinear optisches Bauelement (1) nach einem der vorhergehenden Ansprüche, wobei die erste und die zweite Potentialausgleichsschicht (8, 9) jeweils eine elektrische Filmleitfähigkeit aufweisen und wobei die elektrische Filmleitfähigkeit der ersten und der zweiten Potentialausgleichsschicht (8, 9) um einen Faktor 10 oder mehr, vorzugsweise um einen Faktor 100 oder mehr größer ist als die Dunkelleitfähigkeit des Kristalls.

4. Nichtlinear optisches Bauelement (1) nach einem der vorhergehenden Ansprüche, wobei die erste und die zweite Potentialausgleichsschicht (8, 9) jeweils eine elektrische Filmleitfähigkeit und eine Filmdicke aufweisen, wobei für die erste und die zweite Potentialausgleichsschicht (8, 9) jeweils das Produkt aus der elektrischen Filmleitfähigkeit und der Filmdicke größer ist als das Produkt aus einer kristallinen Photoeitfähigkeit des Kristalls und einer Größe V, wobei

$$V = \frac{l\, b\, a}{d_{Kristall}\, w},$$

wobei $d_{Kristall}$ eine Dicke des Kristalls ohne die Potentialausgleichsschicht in einer Richtung senkrecht zu der ersten und der zweiten Seitenfläche ist, wobei b eine Breite des Wellenleiters senkrecht zu der Dicke $d_{Kristall}$ des Kristalls ist, wobei $l$ die Länge einer Domäne des Kristalls in der Ausbreitungsrichtung ist, wobei $a$ eine Pfadlänge eines Pfads mit minimaler Länge zwischen den geometrischen Schwerpunkten zweier Flächenabschnitte mit entgegengesetzter spontaner Polarisierung auf den ersten und zweiten Seitenflächen ist, wobei der Pfad auf der Oberfläche des Wellenleiters verläuft, und w eine Domänenbreite senkrecht zu dem Pfad ist.

5. Nichtlinear optisches Bauelement (1) nach einem der vorhergehenden Ansprüche, wobei zumindest die erste oder die zweite Potentialausgleichsschicht (8, 9) eine auf die Seitenfläche des Kerns (3) aufgebrachte Schicht aus Indiumzinnoxid oder dotiertem Siliziumdioxid ist.

6. Nichtlinear optisches Bauelement (1) nach einem der vorhergehenden Ansprüche, wobei zumindest die erste oder die zweite Potentialausgleichsschicht (8, 9) eine in dem Kern (3) durch Eindiffusion von Metallionen, insbesondere von Eisenionen oder Kupferionen, ausgebildete Schicht ist.

7. Nichtlinear optisches Bauelement (1) nach einem der vorhergehenden Ansprüche, wobei die erste und die zweite Potentialausgleichsschicht (8, 9) elektrisch leitend miteinander verbunden sind.

8. Nichtlinear optisches Bauelement (1) nach dem vorhergehenden Anspruch, wobei die erste und die zweite Potentialausgleichsschicht (8, 9) durch eine elektrisch leitende Verbindungsschicht (10) an einer dritten Seitenfläche (11) des Kerns (3) elektrisch leitend miteinander verbunden sind.

9. Nichtlinear optisches Bauelement (1) nach einem der vorhergehenden Ansprüche, wobei der Kristall periodisch oder aperiodisch gepolt ist.

10. Nichtlinear optisches Bauelement (1) nach einem der vorhergehenden Ansprüche, wobei der Kristall aus Lithiumniobat, vorzugsweise aus MgO-dotiertem Lithiumniobat, oder Lithiumtantalat besteht.

11. Nichtlinear optisches Bauelement (1) nach einem der vorhergehenden Ansprüche, wobei eine erste, eine zweite und eine dritte Seitenfläche (5, 6, 11) des Wellenleiters (2) von Luft umgeben sind.

12. Nichtlinear optisches Bauelement (1) nach einem der vorhergehenden Ansprüche, wobei der Wellenleiter (2) mit einer vierten Seitenfläche auf einem Träger (4) montiert ist.

13. Optische Baugruppe mit einer Strahlungsquelle für elektromagnetische Strahlung und einem nichtlinear optischen Bauelement (1) nach einem der vorhergehenden Ansprüche, wobei die Strahlungsquelle derart eingerichtet ist, dass sie in einem Betrieb der optischen Baugruppe elektromagnetische Ausgangsstrahlung generiert, wobei die Strahlungsquelle und das nichtlinear optische Bauelement (1) derart angeordnet sind, dass die elektrometrische Ausgangsstrahlung in dem Betrieb der optischen Baugruppe in den Wellenleiter (2) eingekoppelt wird.

14. Verfahren zum Erzeugen von elektromagnetischer Strahlung mit den Schritten

Erzeugen und Abstrahlen einer elektromagnetischen Ausgangsstrahlung mit einer ersten Wellenlänge,
Einkoppeln der elektromagnetischen Ausgangsstrahlung in einer Ausbreitungsrichtung (12) in einen Wellenleiter (2) mit einem stegförmigen Kern (3) aus einem nichtlinear optischen Kristall,

wobei der Kristall Photorefraktion zeigt,
wobei der Kristall eine elektrische Dunkelleitfähigkeit aufweist und
wobei der Kern (3) eine polygonale Querschnittsfläche senkrecht zu der Ausbreitungsrichtung (12) aufweist,

Wandeln der Ausgangsstrahlung in eine Nutzstrahlung mit einer von der ersten Wellenlänge verschiedenen zweiten Wellenlänge oder Modulieren der Ausgangsstrahlung oder Schalten der Ausgangsstrahlung mittels eines nichtlinear optischen Prozesses in dem Kristall,

**dadurch gekennzeichnet, dass** das Verfahren weiterhin den Schritt aufweist
Bereitstellen eines Potentialausgleichs zwischen an einer ersten Seitenfläche (5) des Kerns (3) akkumulierten Ladungsträgern und an einer der ersten Seitenfläche (5) des Kerns (3) gegenüberliegenden zweiten Seitenfläche (6) des Kerns (3) akkumulierten Ladungsträgern.

15. Verfahren nach dem vorhergehenden Anspruch, wobei das Bereitstellen des Potentialausgleichs ein Anordnen einer ersten elektrisch leitfähigen Potentialausgleichschicht (8) an einer ersten Seitenfläche (5) des Wellenleiters (2) und einer zweiten elektrisch leitfähigen Potentialausgleichschicht (9) an einer der ersten Seitenfläche (5) gegenüberliegenden zweiten Seitenfläche (6) umfasst, wobei die erste und die zweite Potentialausgleichsschicht (8, 9) jeweils eine elektrische Filmleitfähigkeit und eine Filmdicke aufweisen, wobei für die erste und die zweite Potentialausgleichsschicht (8, 9) jeweils das Produkt aus der elektrischen Filmleitfähigkeit und der Filmdicke so gewählt ist, dass ein Dämpfungsfaktor des Wellenleiters (2) für die elektromagnetische Ausgangsstrahlung 3 dB/cm oder weniger beträgt.

Fig. 1

Fig. 2

Fig. 3

Fig. 4

Europäisches
Patentamt
European
Patent Office
Office européen
des brevets

**EUROPÄISCHER RECHERCHENBERICHT**

**Nummer der Anmeldung**

**EP 23 15 0519**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YONGFA KONG ET AL: "Recent Progress in Lithium Niobate: Optical Damage, Defect Simulation, and On-Chip Devices", ADVANCED MATERIALS, VCH PUBLISHERS, DE, Bd. 32, Nr. 3, 7. Juli 2019 (2019-07-07), Seite n/a, XP071875701, ISSN: 0935-9648, DOI: 10.1002/ADMA.201806452 * das ganze Dokument * ----- | 1,6,9,10 | INV. G02F1/03 G02F1/35 |
| X | US 2012/063715 A1 (NAKAGAWA JUN [JP] ET AL) 15. März 2012 (2012-03-15) * Abbildungen 1, 10 * * Absätze [0028], [0037], [0044], [0050], [0055] * ----- | 1-5,7,8, 10-15 | |
| X | US 2007/155004 A1 (BUSE KARSTEN [DE] ET AL) 5. Juli 2007 (2007-07-05) * Abbildung 2 * * Absätze [0006] - [0009], [0029] - [0030] * ----- | 1 | |

**RECHERCHIERTE SACHGEBIETE (IPC)**

G02F

Der vorliegende Recherchenbericht wurde für alle Patentansprüche erstellt

| Recherchenort | Abschlußdatum der Recherche | Prüfer |
|---|---|---|
| Den Haag | 20. Juni 2023 | Topak, Eray |

EPO FORM 1503 03.82 (P04C03)

**EP 4 398 023 A1**

ANHANG ZUM EUROPÄISCHEN RECHERCHENBERICHT
ÜBER DIE EUROPÄISCHE PATENTANMELDUNG NR.

EP 23 15 0519

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2023

| Im Recherchenbericht angeführtes Patentdokument | Datum der Veröffentlichung | Mitglied(er) der Patentfamilie | Datum der Veröffentlichung |
|---|---|---|---|
| US 2012063715 A1 | 15-03-2012 | EP 2428837 A1 | 14-03-2012 |
| | | JP 5672529 B2 | 18-02-2015 |
| | | JP 2012058651 A | 22-03-2012 |
| | | US 2012063715 A1 | 15-03-2012 |
| US 2007155004 A1 | 05-07-2007 | DE 102004002109 A1 | 11-08-2005 |
| | | EP 1706523 A1 | 04-10-2006 |
| | | JP 4638883 B2 | 23-02-2011 |
| | | JP 2007519951 A | 19-07-2007 |
| | | US 2007155004 A1 | 05-07-2007 |
| | | WO 2005068690 A1 | 28-07-2005 |

EPO FORM P0461

Für nähere Einzelheiten zu diesem Anhang : siehe Amtsblatt des Europäischen Patentamts, Nr.12/82

13